# EUROPÄISCHE PATENTSCHRIFT

(11) **EP 3 877 653 B1**
(45) Veröffentlichungstag und Bekanntmachung des Hinweises auf die Patenterteilung: **04.01.2023**
(21) Anmeldenummer: 19795550.3
(22) Anmeldetag: 29.10.2019
(51) Int. Cl.: F04D 1/06, F04D 29/22, F03B 3/12

(54) **MEHRSTUFIGE HYDRAULISCHE MASCHINE**
MULTI-STAGE HYDRAULIC MACHINE
MACHINE HYDRAULIQUE À PLUSIEURS ÉTAGES

(30) Priorität: 09.11.2018 DE 102018128065
(43) Veröffentlichungstag der Anmeldung: 15.09.2021
(73) Patentinhaber: Voith Patent GmbH, 89522 Heidenheim (DE)
(72) Erfinder: GIESE, Martin, 89522 Heidenheim (DE); HÜBNER, Björn, 89075 Ulm (DE); LECHNER, Andreas, 89518 Heidenheim (DE)
(74) Vertreter: Voith Patent GmbH - Patentabteilung
(86) Internationale Anmeldenummer: PCT/EP2019/079471
(87) Internationale Veröffentlichungsnummer: WO 2020/094452

(56) Entgegenhaltungen:
- DE-A1- 1 403 253
- US-A- 4 887 940
- US-A1- 2011 027 071
- US-A1- 2015 322 819

## Beschreibung

Die vorliegende Erfindung betrifft eine hydraulische Maschine, wie z.B. eine Radialpumpe oder Pumpturbine, mit einer Mehrzahl von Stufen, wobei jede Stufe ein Laufrad umfasst, welches für eine wenigstens teilweise radiale Durchströmung ausgelegt ist. Die vorliegende Erfindung betrifft hydraulische Maschinen mit einer Leistung von wenigstens 10 MW.

Aus dem Stand der Technik sind gattungsgemäße hydraulische Maschinen bekannt. Beispielhaft sei auf die DE 10 2012 018 720 A1 verwiesen. Solche hydraulische Maschinen umfassen eine Welle und eine Mehrzahl von Laufrädern, welche mit der Welle verbunden sind. Bei der Auslegung einer solchen Maschine steht der Fachmann vor der Herausforderung einerseits die Leistung der Maschine möglichst zu maximieren und anderseits das Kavitationsverhalten zu optimieren und Druckpulsationen zu minimieren.

Ferner offenbart die DE 14 03 253 A1 eine hydraulische Maschine mit zwei Stufen, wobei das Laufrad der ersten Stufe eine geringere Schaufelzahl aufweist als die zweite Stufe.

Die US 2015/322819 A1 offenbart verschiedene radiale Turbinenanordnungen mit mehreren Stufen.

Die Erfinder haben sich die Aufgabe gestellt, eine gattungsgemäße hydraulische Maschine anzugeben, welche ein verbessertes Verhalten hinsichtlich der genannten Herausforderung im Vergleich mit den bekannten hydraulischen Maschinen aufweist.

Die gestellte Aufgabe wird durch eine mehrstufige hydraulische Maschine mit den Merkmalen von Anspruch 1 gelöst. Vorteilhafte Ausführungsformen ergeben sich aus den von Anspruch 1 abhängigen Unteransprüchen.

Die Erfinder haben erkannt, dass die erste Stufe, d.h. die Stufe, die der Niederdruckseite der hydraulischen Maschine benachbart ist, für das Kavitationsverhalten entscheidend ist, während die oberste Stufe, d.h. die Stufe, die der Hochdruckseite der hydraulischen Maschine benachbart ist, für die Druckpulsationen maßgeblich ist. Im Falle, dass die hydraulische Maschine mehr als zwei Stufen aufweist, kann auch die der obersten Stufe benachbarte Stufe noch relevant für Druckpulsationen sein.

Die erfindungsgemäße Lösung wird nachfolgend anhand von Figuren erläutert. Darin ist im Einzelnen folgendes dargestellt:
- Figur 1: Mehrstufige hydraulische Maschine;
- Figur 2: Laufrad einer mehrstufigen hydraulischen Maschine.

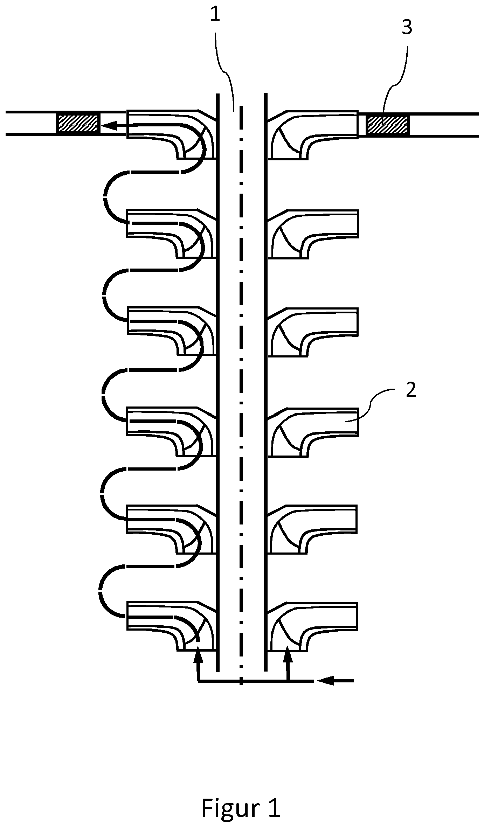

Figur 1 zeigt in sehr schematischer Darstellung eine mehrstufige hydraulische Maschine. Die dargestellte Maschine umfasst eine Welle, welche mit 1 bezeichnet ist. Für jede Stufe umfasst die hydraulische Maschine ein Laufrad, welches mit der Welle verbunden ist. Die Laufräder sind vom radialen Typ. Eines der Laufräder ist mit 2 bezeichnet. Die dargestellte hydraulische Maschine umfasst daher 6 Stufen und ebenso viele Laufräder. Eine gattungsgemäße hydraulische Maschine umfasst im Allgemeinen wenigstens zwei Stufen. Die Pfeile in Figur 1 deuten die Flussrichtung des Mediums im Pumpbetrieb an. D.h. die in Figur 1 ganz unten liegende Stufe ist die erste Stufe und die ganz oben liegende Stufe ist die oberste Stufe der hydraulischen Maschine. Ferner zeigt Figur 1 stationäre Schaufeln, von denen eine mit 3 bezeichnet ist. Der Begriff "stationär" besagt dabei, dass sich diese Schaufeln nicht mit der Welle mitdrehen. Jede Stufe umfasst eine Mehrzahl von stationären Schaufeln 3. In Figur 1 sind jedoch nur zwei der stationären Schaufeln der obersten Stufe dargestellt.

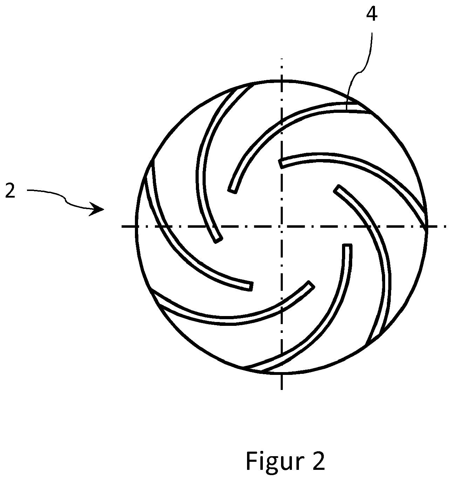

Figur 2 zeigt einen Schnitt durch ein Laufrad, welches mit 2 bezeichnet ist. Das Laufrad umfasst eine Mehrzahl von Laufschaufeln, von denen eine mit 4 bezeichnet ist. Das dargestellte Laufrad 2 umfasst sieben Laufschaufeln.

Bei den aus dem Stand der Technik bekannten mehrstufigen hydraulischen Maschinen haben alle Laufräder 2 die gleiche Anzahl von Laufschaufeln 4. Die Erfinder haben erkannt, dass für ein verbessertes Kavitationsverhalten eine geringere Anzahl von Laufschaufeln 4 von Vorteil ist. Die Erfinder schlagen daher eine hydraulische Maschine vor, bei denen das Laufrad 2 der ersten Stufe eine geringere Anzahl von Laufschaufeln 4 aufweist, als ein beliebiges Laufrad der übrigen Stufen.

Die Erfinder haben ferner erkannt, dass es zur Leistungsmaximierung generell von Vorteil ist, wenn die Anzahl der Laufschaufeln 4 möglichst hoch gewählt wird. Zur weiteren Verbesserung des Verhaltens der hydraulischen Maschine schlagen die Erfinder daher vor, dass die Anzahl der Laufschaufeln 4 des Laufrades 2 der ersten Stufe kleiner ist, als die Anzahl der Laufschaufeln (4) der Laufräder (2) der übrigen Stufen. Da die oberste Stufe besonders sensibel für das Verhalten gegenüber Druckpulsation ist, kann es von Vorteil sein, wenn das Laufrad der obersten Stufe nicht zur Leistungsmaximierung verwendet wird. D.h. das Laufrad der obersten Stufe kann auch eine Anzahl von Laufschaufeln haben, die kleiner oder gleich der Anzahl der Laufschaufeln des Laufrades der ersten Stufe ist, falls die Anzahl der Stufen wenigsten drei beträgt. In einem solchen Fall schlagen die Erfinder vor, dass die Anzahl der Laufschaufeln 4 des Laufrades 2 der ersten Stufe kleiner ist als die Anzahl der Laufschaufeln 4 der Laufräder 2 der Stufen, welche zwischen der ersten und der obersten Stufe liegen.

Die Erfinder haben ferner erkannt, dass das Verhalten gegenüber Druckpulsationen zusätzlich verbessert werden kann, wenn der Abstand zwischen den stationären Schaufeln 3 und den Laufschaufeln 4 des Laufrades 2 der obersten Stufe im Vergleich zu den entsprechenden Abständen in den anderen Stufen vergrößert wird. Zur Veranschaulichung dieses Abstandes weist die auf der rechten Seite dargestellte stationäre Schaufel 3 in Figur 1 einen kleineren Abstand zu den Laufschaufeln 4 auf, als die auf der linken Seite dargestellte. Dies dient allerdings nur der Veranschaulichung - natürlich wird dieser Abstand innerhalb einer Stufe immer für alle stationären Schaufeln 3 gleich groß sein. Im Falle, dass die hydraulische Maschine mehr als zwei Stufen aufweist, kann auch bei der der obersten Stufe benachbarten Stufe ein höherer Abstand zwischen den stationären Schaufeln 3 und den Laufschaufeln 4 von Vorteil sein, wobei die Abstände in der obersten und der der obersten benachbarten Stufe unterschiedlich groß sein können. Insbesondere ist es von Vorteil, wenn der Abstand zwischen den stationären Schaufeln 3 und den Laufschaufeln 4 bei der obersten Stufe größer ist als bei der der obersten Stufe benachbarten Stufe.

Es kann ferner von Vorteil sein, wenn die Laufräder 2 der für die Leistungsoptimierung verwendeten Stufen (d.h. die Stufen, deren Laufräder 2 eine höhere Laufschaufelzahl aufweisen als das Laufrad 2 der ersten Stufe) Laufschaufeln 4 mit unterschiedlichen Längen aufweisen.

Die Auslegung einer gattungsgemäßen hydraulischen Maschine gemäß der hier vorgelegten erfinderischen technischen Lehre erweist sich besonders bei der Modernisierung von bestehenden hydraulischen Maschinen als hilfreich, da in solchen Fällen in der Regel die Freiheitsgrade in der Auslegung durch den geforderten Retro-Fit an die bestehende Maschine eingeschränkt sind.

Im Folgenden haben die Erfinder die verschiedenen Ausführungsformen der vorliegenden Erfindung auf eine konkrete hydraulische Maschine angewandt. Es handelt sich dabei um ein Modernisierungsprojekt, bei dem ein bestehendes Gehäuse wiederverwendet werden soll, wodurch die Laufrad-Abmessungen begrenzt sind. Innerhalb dieser Abmessungsgrenzen soll die maximal mögliche Pumpleistung bei definierter Kavitationssicherheit erreicht werden, wobei gleichzeitig die in das Spiralgehäuse sich ausbreitenden Druckpulsationen möglichst niedrig sein sollen. Die betreffende hydraulische Maschine weist eine Pumpleistung von mehr als 10 MW auf und umfasst vier Stufen, d.h. die oberste Stufe ist die vierte Stufe.

In einer ersten Ausführungsform ergeben sich folgende Laufschaufelzahlen:

| | | |
|---|---|---|
| 1. | Stufe: | 9 |
| 2. | Stufe: | 10 |
| 3. | Stufe: | 9 |
| 4. | Stufe: | 9 |

D.h. die Anzahl der Laufschaufeln der ersten Stufe ist kleiner als die Anzahl der Laufschaufeln der zweiten Stufe.

In einer zweiten Ausführungsform ergeben sich folgende Laufschaufelzahlen:

| | | | | |
|---|---|---|---|---|
| 1. | Stufe: | 9 | (7) | (8) |
| 2. | Stufe: | 10 | (11) | (16) |
| 3. | Stufe: | 10 | (11) | (16) |
| 4. | Stufe: | 10 | (9) | (16) |

D.h. die Anzahl der Laufschaufeln der ersten Stufe ist kleiner als die Anzahl der Laufschaufeln aller anderen Stufen. Die Zahlen in Klammern geben dabei zwei weitere Varianten an, die ebenfalls in diese Kategorie fallen, wobei die Laufräder mit 16 Laufschaufeln jeweils Laufschaufeln mit unterschiedlicher Länge aufweisen.

In einer dritten Ausführungsform ergeben sich folgende Laufschaufelzahlen:

| | | |
|---|---|---|
| 1. | Stufe: | 9 |
| 2. | Stufe: | 10 |
| 3. | Stufe: | 10 |
| 4. | Stufe: | 9 |

D.h. die Anzahl der Laufschaufeln der ersten Stufe ist kleiner als die Anzahl der Laufschaufeln aller Stufen, die zwischen der ersten und der obersten Stufe liegen.

Weitere Ausführungsformen ergeben sich durch die Kombination der im Vorhergehenden beschriebenen konkreten Ausführungsformen mit den Variationen, die oben in Bezug auf den Abstand zwischen stationären Schaufeln und Laufschaufeln erwähnt wurden. D.h. dass in der 4. und ggf. der 3. Stufe dieser Abstand erfindungsgemäß größer ist als bei den anderen Stufen.

## Patentansprüche

1. Hydraulische Maschine mit wenigstens zwei Stufen, umfassend eine Welle (1) und Laufräder (2), wobei jede Stufe ein Laufrad (2) umfasst, und wobei jedes Laufrad (2) eine Mehrzahl von Laufschaufeln (4) umfasst, mit der Welle (1) verbunden und vom radialen Typ ist, und wobei die hydraulische Maschine eine Nieder- und eine Hochdruckseite aufweist, und wobei eine erste Stufe benachbart zur Niederdruckseite der hydraulischen Maschine angeordnet ist, und wobei eine oberste Stufe benachbart zur Hochdruckseite der hydraulischen Maschine angeordnet ist, und wobei die Anzahl der Laufschaufeln (4) des Laufrades (2) der ersten Stufe kleiner ist als die Anzahl der Laufschaufeln (4) eines beliebigen Laufrades (2) der übrigen Stufen, **dadurch gekennzeichnet, dass** jede Stufe eine Mehrzahl von stationären Schaufeln (3) umfasst, wobei der Abstand zwischen den stationären Schaufeln (3) und den Laufschaufeln (4) der obersten Stufe größer ist als der Abstand zwischen den stationären Schaufeln (3) und den Laufschaufeln (4) der übrigen Stufen.

2. Hydraulische Maschine nach Anspruch 1 mit wenigstens drei Stufen, wobei der Abstand zwischen den stationären Schaufeln (3) und den Laufschaufeln (4) der obersten Stufe und der der obersten Stufe benachbarten Stufe größer ist als der Abstand zwischen den stationären Schaufeln (3) und den Laufschaufeln (4) der übrigen Stufen.

3. Hydraulische Maschine nach einem der Ansprüche 1 bis 2, wobei die Anzahl der Laufschaufeln (4) des Laufrades (2) der ersten Stufe kleiner ist als die Anzahl der Laufschaufeln (4) der Laufräder (2) der übrigen Stufen.

4. Hydraulische Maschine nach einem der Ansprüche 1 bis 3 mit wenigstens drei Stufen, wobei die Anzahl der Laufschaufeln (4) des Laufrades (2) der ersten Stufe kleiner ist als die Anzahl der Laufschaufeln (4) der Laufräder der Stufen, welche zwischen der ersten und der obersten Stufe liegen.

5. Hydraulische Maschine nach einem der Ansprüche 1 bis 4, wobei ein Laufrad (2), welches eine höhere Anzahl an Laufschaufeln (4) aufweist als das Laufrad (2) der ersten Stufen, Laufschaufeln (4) mit unterschiedlicher Länge aufweist.

6. Hydraulische Maschine nach Anspruch 1 mit vier Stufen, wobei die hydraulische Maschine eine Pumpleistung von wenigstens 10 MW aufweist, und wobei die Anzahl der Laufschaufeln (4) des Laufrades (2) der ersten Stufe 9 beträgt, und die Anzahl der Laufschaufeln (4) des Laufrades (2) der der ersten Stufe benachbarten Stufe 10 beträgt, und die Anzahl der Laufschaufeln (4) der Laufräder (2) der übrigen Stufen 9 beträgt.

7. Hydraulische Maschine nach Anspruch 3 mit vier Stufen, wobei die hydraulische Maschine eine Pumpleistung von wenigstens 10 MW aufweist, und wobei die Anzahl der Laufschaufeln (4) des Laufrades (2) der ersten Stufe 9 beträgt, und die Anzahl der Laufschaufeln (4) der Laufräder (2) der übrigen Stufen 10 beträgt.

8. Hydraulische Maschine nach Anspruch 3 mit vier Stufen, wobei die hydraulische Maschine eine Pumpleistung von wenigstens 10 MW aufweist, und wobei die Anzahl der Laufschaufeln (4) des Laufrades (2) der ersten Stufe 7 beträgt, und die Anzahl der Laufschaufeln (4) des Laufrades (2) der der ersten Stufe benachbarten Stufe 11 beträgt, und die Anzahl der Laufschaufeln (4) des Laufrades (2) der obersten Stufen 9 beträgt, und die Anzahl der Laufschaufeln (4) des Laufrades (2) der der obersten Stufe benachbarten Stufe 11 beträgt.

9. Hydraulische Maschine nach Anspruch 3 und Anspruch 5 6 mit vier Stufen, wobei die hydraulische Maschine eine Pumpleistung von wenigstens 10 MW aufweist, und wobei die Anzahl der Laufschaufeln (4) des Laufrades (2) der ersten Stufe 8 beträgt, und die Anzahl der Laufschaufeln (4) der Laufräder (2) der übrigen Stufen 16 beträgt.

10. Hydraulische Maschine nach Anspruch 4 mit vier Stufen, wobei die hydraulische Maschine eine Pumpleistung von wenigstens 10 MW aufweist, und wobei die Anzahl der Laufschaufeln (4) des Laufrades (2) der ersten Stufe 9 beträgt, und die Anzahl der Laufschaufeln (4) des Laufrades (2) der obersten Stufen 9 beträgt, und die Anzahl der Laufschaufeln (4) der übrigen Stufen 10 beträgt.

## Claims

1. A hydraulic machine having at least two stages comprising a shaft (1) and impellers (2), wherein each stage comprises an impeller (2), and wherein each impeller (2) comprises a plurality of impeller blades (4), is connected to the shaft (1) and is of the radial type, and wherein the hydraulic machine has a low and a high pressure side, and wherein a first stage is located adjacent to the low pressure side of the hydraulic machine, and wherein an uppermost stage is located adjacent to the high pressure side of the hydraulic machine, and wherein the number of impeller blades (4) of the first stage impeller (2) is less than the number of impeller blades (4) of any one impeller (2) of the remaining stages, **characterised in that** each stage comprises a plurality of stationary blades (3), the distance between the stationary blades (3) and the impeller blades (4) of the uppermost stage being greater than the distance between the stationary blades (3) and the impeller blades (4) of the remaining stages.

2. Hydraulic machine according to claim 1 with at least three stages, wherein the distance between the stationary blades (3) and the moving blades (4) of the uppermost stage and the stage adjacent to the uppermost stage is greater than the distance between the stationary blades (3) and the moving blades (4) of the remaining stages.

3. Hydraulic machine according to any one of claims 1 to 2, wherein the number of blades (4) of the impeller (2) of the first stage is smaller than the number of blades (4) of the impellers (2) of the other stages.

4. Hydraulic machine according to any one of claims 1 to 3, comprising at least three stages, wherein the number of blades (4) of the impeller (2) of the first stage is smaller than the number of blades (4) of the impellers of the stages located between the first and the uppermost stage.

5. A hydraulic machine according to any one of claims 1 to 4, wherein an impeller (2) having a higher number of blades (4) than the impeller (2) of the first stages has blades (4) of different lengths.

6. The hydraulic machine of claim 1 having four stages, wherein the hydraulic machine has a pumping power of at least 10 MW, and wherein the number of blades (4) of the impeller (2) of the first stage is 9, and the number of blades (4) of the impeller (2) of the stage adjacent to the first stage is 10, and the number of blades (4) of the impellers (2) of the remaining stages is 9.

7. Hydraulic machine according to claim 3 with four stages, wherein the hydraulic machine has a pumping capacity of at least 10 MW, and wherein the number of blades (4) of the impeller (2) of the first stage is 9, and the number of blades (4) of the impellers (2) of the remaining stages is 10.

8. Hydraulic machine according to claim 3 with four stages, wherein the hydraulic machine has a pumping capacity of at least 10 MW, and wherein the number of blades (4) of the impeller (2) of the first stage is 7, and the number of blades (4) of the impeller (2) of the stage adjacent to the first stage is 11, and the number of blades (4) of the impeller (2) of the uppermost stages is 9, and the number of blades (4) of the impeller (2) of the stage adjacent to the uppermost stage is 11.

9. A hydraulic machine according to claim 3 and claim 5 having four stages, wherein the hydraulic machine has a pumping power of at least 10 MW, and wherein the number of blades (4) of the impeller (2) of the first stage is 8, and the number of blades (4) of the impellers (2) of the remaining stages is 16.

10. A hydraulic machine according to claim 4 with four stages, wherein the hydraulic machine has a pumping power of at least 10 MW, and wherein the number of blades (4) of the impeller (2) of the first stage is 9, and the number of blades (4) of the impeller (2) of the uppermost stages is 9, and the number of blades (4) of the remaining stages is 10.

## Revendications

1. Machine hydraulique ayant au moins deux étages, comprenant un arbre (1) et des roues (2), dans laquelle chaque étage comprend une roue (2), et dans laquelle chaque roue (2) comprend une pluralité d'aubes (4), est reliée à l'arbre (1) et est du type radial, et dans laquelle la machine hydraulique a un côté basse pression et un côté haute pression, et dans laquelle un premier étage est disposé de manière adjacente au côté basse pression de la machine hydraulique, et dans laquelle un étage supérieur est disposé de manière adjacente au côté haute pression de la machine hydraulique, et dans lequel le nombre d'aubes mobiles (4) de la roue mobile (2) du premier étage est inférieur au nombre d'aubes mobiles (4) de n'importe quelle roue mobile (2) des autres étages, **caractérisé en ce que** chaque étage comprend une pluralité d'aubes fixes (3), la distance entre les aubes fixes (3) et les aubes mobiles (4) de l'étage le plus haut étant supérieure à la distance entre les aubes fixes (3) et les aubes mobiles (4) des autres étages.

2. Machine hydraulique selon la revendication 1, comprenant au moins trois étages, dans laquelle la distance entre les aubes fixes (3) et les aubes mobiles (4) de l'étage le plus haut et de l'étage adjacent à l'étage le plus haut est supérieure à la distance entre les aubes fixes (3) et les aubes mobiles (4) des autres étages.

3. Machine hydraulique selon l'une des revendications 1 à 2, dans laquelle le nombre d'aubes mobiles (4) de la roue (2) du premier étage est inférieur au nombre d'aubes mobiles (4) des roues (2) des autres étages.

4. Machine hydraulique selon l'une quelconque des revendications 1 à 3, comprenant au moins trois étages, dans laquelle le nombre d'aubes (4) de la roue (2) du premier étage est inférieur au nombre d'aubes (4) des roues des étages situés entre le premier étage et l'étage supérieur.

5. Machine hydraulique selon l'une quelconque des revendications 1 à 4, dans laquelle une roue (2), qui comporte un nombre d'aubes (4) plus élevé que la roue (2) des premiers étages, comporte des aubes (4) de longueur différente.

6. Machine hydraulique selon la revendication 1 avec quatre étages, dans laquelle la machine hydraulique présente une puissance de pompage d'au moins 10 MW, et dans laquelle le nombre d'aubes mobiles (4) de la roue mobile (2) du premier étage est de 9, et le nombre d'aubes mobiles (4) de la roue mobile (2) de l'étage adjacent au premier étage est de 10, et le nombre d'aubes mobiles (4) des roues mobiles (2) des autres étages est de 9.

7. Machine hydraulique selon la revendication 3 avec quatre étages, dans laquelle la machine hydraulique présente une puissance de pompage d'au moins 10 MW, et dans laquelle le nombre d'aubes mobiles (4) de la roue mobile (2) du premier étage est de 9, et le nombre d'aubes mobiles (4) des roues mobiles (2) des autres étages est de 10.

8. Machine hydraulique selon la revendication 3 avec quatre étages, dans laquelle la machine hydraulique présente une puissance de pompage d'au moins 10 MW, et dans laquelle le nombre d'aubes mobiles (4) de la roue mobile (2) du premier étage est de 7, et le nombre d'aubes mobiles (4) de la roue mobile (2) de l'étage adjacent au premier étage est de 11, et le nombre d'aubes mobiles (4) de la roue mobile (2) des étages supérieurs est de 9, et le nombre d'aubes mobiles (4) de la roue mobile (2) de l'étage adjacent à l'étage supérieur est de 11.

9. Machine hydraulique selon la revendication 3 et la revendication 5 avec quatre étages, dans laquelle la machine hydraulique présente une puissance de pompage d'au moins 10 MW, et dans laquelle le nombre d'aubes mobiles (4) de la roue mobile (2) du premier étage est de 8, et le nombre d'aubes mobiles (4) des roues mobiles (2) des autres étages est de 16.

10. Machine hydraulique selon la revendication 4 avec quatre étages, dans laquelle la machine hydraulique présente une puissance de pompage d'au moins 10 MW, et dans laquelle le nombre d'aubes mobiles (4) de la roue mobile (2) du premier étage est de 9, et le nombre d'aubes mobiles (4) de la roue mobile (2) des étages supérieurs est de 9, et le nombre d'aubes mobiles (4) des autres étages est de 10.
